# EUROPEAN PATENT APPLICATION

(11) **EP 3 929 720 A1**
(43) Date of publication of application: **29.12.2021**
(21) Application number: 21179313.8
(22) Date of filing: 14.06.2021
(51) Int. Cl.: G06F 3/12

(54) **INFORMATION PROCESSING DEVICE, INFORMATION PROCESSING SYSTEM, AND CARRIER MEANS**

(30) Priority: 25.06.2020 JP 2020109626
(71) Applicant: Ricoh Company, Ltd., Tokyo 143-8555 (JP)
(72) Inventor: WATANABE, Hodaka, Tokyo, 143-8555 (JP)
(74) Representative: White, Duncan Rohan

(57) **Abstract**

An information processing device (12), includes a reception unit (50, 57, 80) that receives an acquisition request for a job to be processed. The acquisition request includes identification information identifying an apparatus (10) and location information indicating a location of the apparatus (10). The information processing device (12) further includes a determination unit (50, 82) that determines whether the job to be processed is stored, based on the location information included in the acquisition request. The information processing device (12) further includes a transmission unit (50, 57, 83) that transmits, in response to a determination result indicating that the job to be processed is stored, the job to the apparatus (10) identified by the identification information included in the acquisition request.

## Description

### BACKGROUND

### Technical Field

Embodiments of the present disclosure relate to an information processing device, an information processing system, and a carrier means.

### Related Art

There is a known technique in which a server manages operating status of a plurality of apparatuses distributed on a network, selects the most suitable apparatus among from the plurality of apparatuses, in response to a job processing request, and transmits a job to the selected apparatus for processing the job (see, for example, Japanese Unexamined Patent Application Publication No.2003-162386).

However, the above-described technology in which the server selects the apparatus and transmits the job to the selected apparatus is not applicable to a network configuration in which an apparatus is not directly accessible from a server.

To solve the above-described problem, a device, system, and program each capable of instructing the apparatus to process a job in a network configuration in which the apparatus is not directly accessible from the server are provided.

According to one or more embodiments of the present disclosure, an apparatus is capable of processing a job in a network configuration in which the apparatus is not directly accessible by a server.

### SUMMARY

An exemplary embodiment of the present disclosure includes an information processing device (12), including a reception unit (50, 57, 80) that receives an acquisition request for a job to be processed. The acquisition request includes identification information identifying an apparatus (10) and location information indicating a location of the apparatus (10). The information processing device (12) further includes a determination unit (50, 82) that determines whether the job to be processed is stored, based on the location information included in the acquisition request. The information processing device (12) further includes a transmission unit (50, 57, 83) that transmits, in response to a determination result indicating that the job to be processed is stored, the job to the apparatus (10) identified by the identification information included in the acquisition request.

According to an embodiment, an apparatus is capable of processing a job in a network configuration in which the apparatus is not directly accessible by a server.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is an illustration of an example configuration of an information processing system according to one or more embodiments;
FIG. 2 is a diagram illustrating an overview of a process performed by an information processing system according to one or more embodiments;
FIG. 3 is a block diagram illustrating an example of a hardware configuration of an image forming apparatus according to one or more embodiments;
FIG. 4 is a block diagram illustrating an example of a hardware configuration of a print server according to one or more embodiments;
FIG. 5 is a block diagram illustrating an example of a functional configuration of a print server according to one or more embodiments;
FIG. 6 is a sequence diagram illustrating a processing flow executed by an image forming apparatus according to one or more embodiments;
FIG. 7 is a sequence diagram illustrating a processing flow executed by a print server according to one or more embodiments; and
FIG. 8 is a diagram illustrating an example of management information including a processing status of a job.

The accompanying drawings are intended to depict example embodiments of the present disclosure and should not be interpreted to limit the scope thereof. The accompanying drawings are not to be considered as drawn to scale unless explicitly noted.

### DETAILED DESCRIPTION

The terminology used herein is for describing particular embodiments only and is not intended to be limiting of the present disclosure. As used herein, the singular forms "a", "an", and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof. In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operation in a similar manner, and achieve a similar result.

Embodiments according to the present disclosure are described below. However, the present disclosure is not intended to be limited to the embodiments described herein.

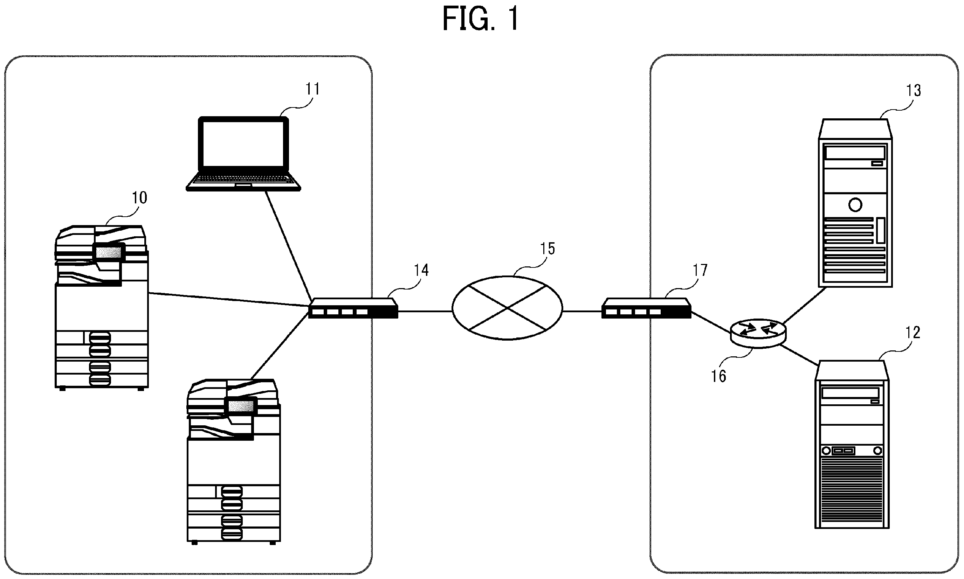

FIG. 1 is an illustration of an example configuration of an information processing system according to an embodiment of the present disclosure. The information processing system includes one or more image forming apparatuses 10 as apparatuses, a client personal computer (PC) 11 used by a user, a print server 12, and a host system 13. The one or more image forming apparatuses 10 and the client PC 11 are installed in a site 1 such as in a building, and the print server 12 and the host system 13 are installed in a site 2 that is different from the place 1. It should be noted that the print server 12 and the host system 13 are not limited to installed in the same site, but a site where the print server 12 is installed may be different from a site where the host system 13 is installed.

At the site 1, the one or more image forming apparatuses 10 and client PC 11 are connected to a relay device (router) 14, and a local network is built. The router 14 is connected to an external network 15 such as the Internet. Although the number of the client PC 11 used in the present embodiment in one, two or more client PCs 11 may be used. In addition, in the present embodiment, the local network is built in the site 1, but this is not limiting. In some embodiments, the local network may be built in a plurality of sites including a site 3 and a site 4. Other devices may be connected to the local network.

The apparatus is described as the image forming apparatus 10 such as a MultiFunction Peripheral (MFP). The apparatus is not limited to the image forming apparatus 10 as long as the apparatus has a communication function and is capable of processing a job. The apparatus includes, for example, a projector (PJ), an interactive white board (IWB), which is a white board having an electronic whiteboard function capable of mutual communication, an industrial machine, an imaging device, a sound collecting device, a medical device, a network home appliance, an automobile (connected car), a notebook PC, a mobile phone, a smartphone, a tablet terminal, a game console, a personal digital assistant (PDA), a wearable PC, and a desktop PC.

The image forming apparatus 10 has a plurality of functions such as a scan function, a copy function, a print function, a facsimile transmission/reception function, and a communication function, and performs image formation. The image forming apparatus 10 includes an operation unit that receives user input and displays processing status, errors, and the like, and an image forming unit that implements each function. The image forming apparatus 10 communicates with the print server 12 via the external network 15, receives print data from the print server 12, and processes a print job. The image forming apparatus 10 executes printing based on the print data as a print job and outputs a printed matter.

The client PC 11 may be a notebook PC or a desktop PC, which is used by a user. The client PC 11 is not limited to a PC, and may be a smartphone, a tablet terminal, or the like. The client PC 11 transmits print data and requests processing of a print job. The print data may be any data such as document data, image data, table data, or the like.

The print server 12 and the host system 13 are connected to a relay device (gateway) 16 in the site 2. The gateway 16 is connected to the external network 15 via a network connector 17. The host system 13 functions as a job generation system, generates print data including information on the site 1 where the client PC 11 is installed (location information) from a print job processing request received from the client PC 11, and transmits the print data to the print server 12. The print server 12 stores the received print data as a print job and transmits the print data to the image forming apparatus 10 to instruct to process the print job. The gateway 16 is a device for relaying communication between two networks having different protocols. In the present embodiment, the host system 13 is provided and the host system 13 generates the print data. In some embodiments, the print server 12 may generate the print data, and the host system 13 may not be provided.

The image forming apparatus 10 and the client PC 11 are set in the local network, and a firewall is built by the router 14, so that the image forming apparatus 10 and the client PC 11 are disconnected from the outside. However, the image forming apparatus 10 and the client PC 11 are allowed to access the external network 15. Accordingly, the image forming apparatus 10 and the client PC 11 are connectable to the print server 12 and the host system 13 via the external network 15.

The print server 12 is connectable to the external network 15, but the connection is cut off by the router 14. Accordingly, the print server 12 is not able to directly access the image forming apparatus 10 and the client PC 11.

In such a network configuration to which the print server 12 is not able to be directly access, the client PC 11 transmits a print job processing request to the host system 13. However, the print server 12 that has received the print data from the host system 13 is not able to transmit the print data to the image forming apparatus 10 and instruct to process the print job.

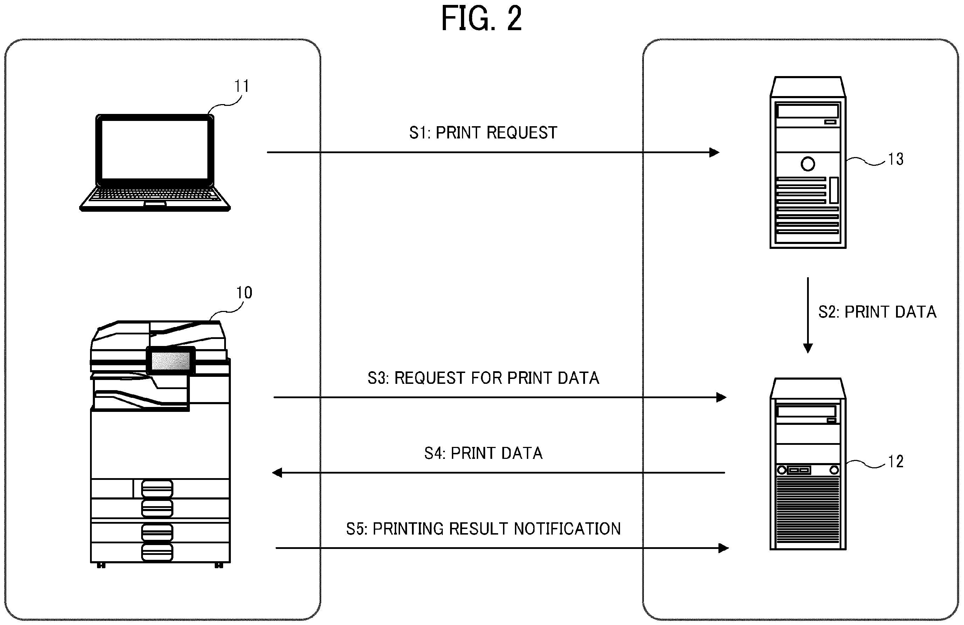

Accordingly, a process as illustrated in FIG. 2 is performed to transmit the print data to the image forming apparatus 10 and instruct the processing of the print job. In response to a user operation, the client PC 11 transmits to the host system 13 a print request to print a document (S1). The print request may be referred to as a print job processing request, hereinafter. The print job processing request includes, for example, document data, print setting information, user information. The print job processing request is given with a job identification (ID), which is identification information for identifying the print job. The print setting information includes information on a font of characters to be printed, margins, the number of prints, monochrome/color, whether duplex printing or not, and whether combine printing or not, for example. The user information includes a user name and a user ID, for example.

The host system 13 generates print data including location information based on the print job processing request and transmits the print data to the print server 12 (S2). The host system 13 registers the user information and the location information in association with each other, changes the user information included in the processing request to the location information, and transmits the print data including the location information to the print server 12. The print server 12 stores the received print data.

The image forming apparatus 10 is not directly accessible from the print server 12. Accordingly, the image forming apparatus 10 capable of directly accessing the print server 12 transmits a print data acquisition request, which is a request for print data, to the print server 12 (S3). The print data acquisition request may be simply referred to as an acquisition request, hereinafter. The acquisition request includes the location information indicating a location of the image forming apparatus 10 and identification information (device ID) for identifying the image forming apparatus 10.

In response to the acquisition request from the image forming apparatus 10, the print server 12 determines whether the print data to be processed is stored or not. When the print data is stored, the print server 12 transmits the print data to the image forming apparatus 10 as a response to the acquisition request (S4). At this time, the print server 12 checks the location information included in the acquisition request and searches for print data of which location information is same as the one included in the acquisition request and of which a processing status does not indicate that printing is being processed. When there is the print data that satisfies the conditions, the print server 12 transmits the print data as the response to the acquisition request. When a plurality of image forming apparatuses 10 is provided in the same location, there may be a situation in which another image forming apparatus that is different from the image forming apparatus 10, which has just transmitted the acquisition request, had received the print data and started printing in relation to the print data. In such a situation, the status of the print data indicates that printing is being processed, and in order to prevent the same print data from being processed, print data of which the status indicates other status than "printing is being processed" is searched.

The image forming apparatus 10 outputs the received print data and transmits an output result as a processing result (printing result) to the print server 12 (S5). The image forming apparatus 10 performs processing on the print data, that is, prints a document based on the print data and outputs a printed matter.

As described above, the print data is transmitted to the image forming apparatus 10 as a response to the request from the image forming apparatus 10. Accordingly, in a network configuration in which the image forming apparatus 10 is not directly accessible from the print server 12, the print data can be transmitted to the image forming apparatus 10.

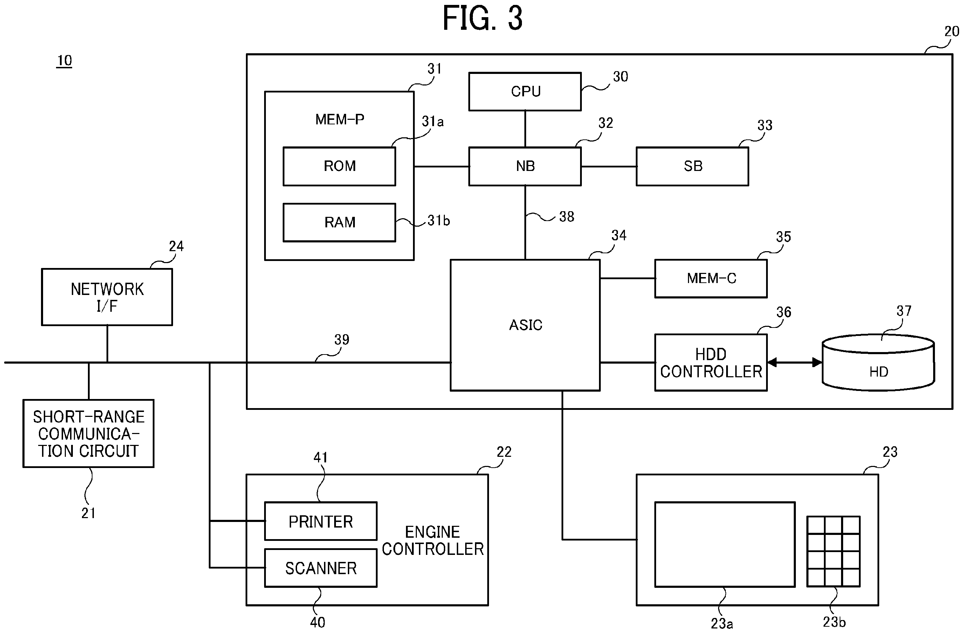

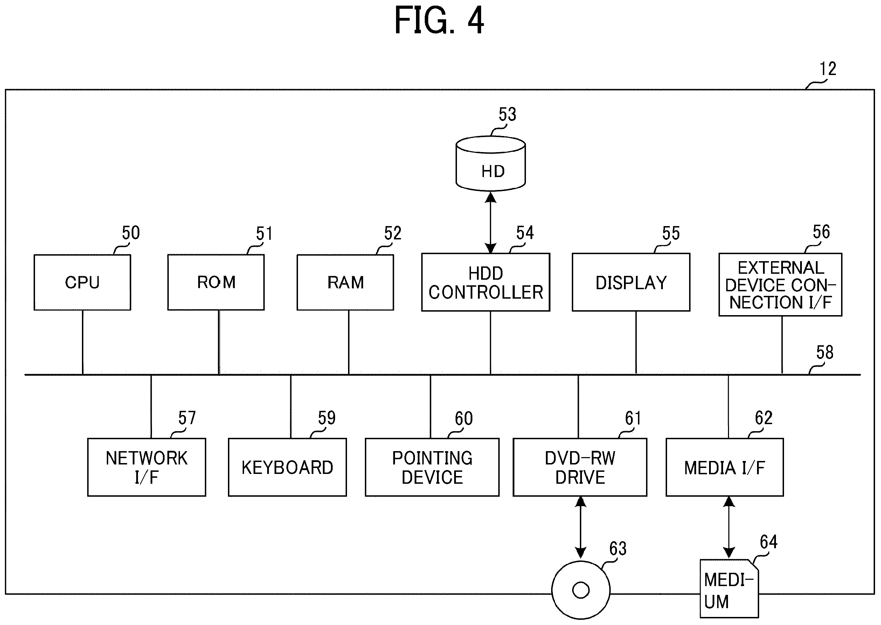

A description is given below of a hardware configuration of each of devices (apparatuses, servers) included in the information processing system, according to the present embodiment. Since each of the client PC 11, the print server 12, the host system 13, the router 14, and the gateway 16 has substantially the same hardware configuration as that of the print server 12, a redundant description is omitted. FIG. 3 is a block diagram illustrating an example of a hardware configuration of the image forming apparatus 10 according to the present embodiment of the disclosure. FIG. 4 is a block diagram illustrating an example of a hardware configuration of the print server 12 according to the present embodiment of the disclosure.

The image forming apparatus 10 illustrated in FIG. 3 is described as an MFP having a plurality of functions such as a scan function, a copy function, a print function, and a facsimile communication function. The image forming apparatus 10 includes a controller 20, a short-range communication circuit 21, an engine controller 22, an operation panel 23, and a network interface (I/F) 24.

The controller 20 includes a central processing unit (CPU) 30 as a main processor of a computer, a system memory (MEM-P) 31, a northbridge (NB) 32, a southbridge (SB) 33, an application-specific integrated circuit (ASIC) 34, a local memory (MEM-C) 35, a hard disk drive (HDD) controller 36, and a hard disk (HD) 37. The NB 32 and the ASIC 34 are connected by an accelerated graphics port (AGP) bus 38.

The CPU 30 performs overall control of the MFP. The NB 32 is a bridge for connecting the CPU 30, the MEM-P31, the SB 33, and the AGP bus 38, and includes a memory controller for reading from or writing to the MEM-P31, a Peripheral Component Interconnect (PCI) master, and an AGP target.

The MEM-P 31 includes a ROM 31a as a memory that stores a program or data for implementing various functions of the controller 20. The MEM-P 31 further includes a RAM 31b as a memory that deploys the program or data, or as a drawing memory that stores drawing data for printing. The program stored in the RAM 31b may be stored in any computer-readable storage (recording) medium, such as a compact disc-read only memory (CD-ROM), compact disc-recordable (CD-R), or digital versatile disc (DVD), in a file format installable or executable by the computer, for distribution.

The SB 33 connects the NB 32 with a Peripheral Component Interconnect (PCI) device or a peripheral device. The ASIC 34 is an Integrated Circuit (IC) dedicated to an image processing use, and connects the AGP bus 38, a PCI bus 39, the HDD controller 36, and the MEM-C 35. The ASIC 34 includes a PCI target, an AGP master, an arbiter (ARB) that is the core of the ASIC 34, a memory controller that controls the MEM-C 35, and a plurality of Direct Memory Access Controllers (DMACs) that, for example, rotate image data by hardware logic. The ASIC 34 further includes a PCI unit that transfers data between a scanner 40 and a printer 41 through the PCI bus 39. In addition, a universal serial bus (USB) interface or an Institute of Electrical and Electronics Engineers 1394 (IEEE 1394) interface may be connected to the ASIC 34.

The MEM-C 35 is a local memory used as a buffer for image data to be copied or a code buffer. The HD 37 stores various image data, font data for printing, and form data. The HDD controller 36 reads or writes data to or from the HD 37 under control of the CPU 30. The AGP bus 38 is a bus interface for a graphics accelerator card, which has been proposed to accelerate graphics processing. Through directly accessing the MEM-P 31 by high-throughput, speed of the graphics accelerator card is improved.

The short-range communication circuit 21 is a communication circuit that communicates in compliance with Near Field Communication (NFC), BLUETOOTH, or the like.

The engine controller 22 includes the scanner 40 and the printer 41. The operation panel 23 includes a display 23a such as a touch panel and an operation panel device 23b. The display 23a displays current settings or a selection screen and receives a user input. The operation panel device 23b includes, for example, a ten key, which is used to receive settings for various image forming parameters such as an image density parameter, and a start key, which is used to receive an instruction to start copying.

The controller 20 controls, for example, inputs from the operation panel 23. The scanner 40 and the printer 41 each performs various image processing, such as error diffusion or gamma conversion.

In response to an instruction to select a specific application through the operation panel 23, for example, using an application (app) switch key, the MFP selectively performs a document box function, a copy function, a print function, and a facsimile communication function. When each function is selected, the MFP enters a corresponding mode.

The network I/F 24 is an interface that transmits or receives data through a communication network. The short-range communication circuit 21 and the network I/F 24 are electrically connected to the ASIC 34 through the PCI bus 39.

The print server 12 illustrated in FIG. 4 is a general computer and includes a CPU 50, a ROM 51, a RAM 52, an HD 53, an HDD controller 54, a display 55, an external device connection I/F 56, a network I/F 57, a data bus 58, a keyboard 59, a pointing device 60, a Digital Versatile Disk Rewritable (DVD-RW) drive 61, and a media I/F 62.

The CPU 50 performs overall control of the print server 12. The ROM 51 stores programs such as an Initial Program Loader (IPL) to boot the CPU 50. The RAM 52 provides a working area for the CPU 50. The HD 53 stores various data such as a control program. The HDD controller 54 reads and writes various data from and to the HD 53 under control of the CPU 50. The display 55 displays various types of information such as a cursor, a menu, a window, characters, or an image.

The external device connection I/F 56 is an interface for connecting to various external devices. Examples of the external devices include a USB memory and a printer. The network I/F 57 is an interface that transmits or receives data through a communication network. Examples of the data bus 58 include, but not limited to, an address bus and a data bus, which electrically connects the components, including such as the CPU 50, with one another.

The keyboard 59 is one example of an input device (means) provided with a plurality of keys for enabling a user to input characters, numerals, or various instructions. The pointing device 60 is another example of an input device (means) for enabling a user to select or execute a specific instruction, select a target for processing, or move a cursor being displayed. The DVD-RW drive 61 reads and writes various data from and to a DVD-RW 63, which is an example of a removable storage medium (recording medium). Although the DVD-RW 63 is used as an example in the present embodiment, this not limiting. In some embodiments, a DVD Recordable Disc (DVD-R) or the like may be used. The media I/F 62 controls reading or writing (storing) of data from or to a storage medium (recording medium) 64 such as a flash memory.

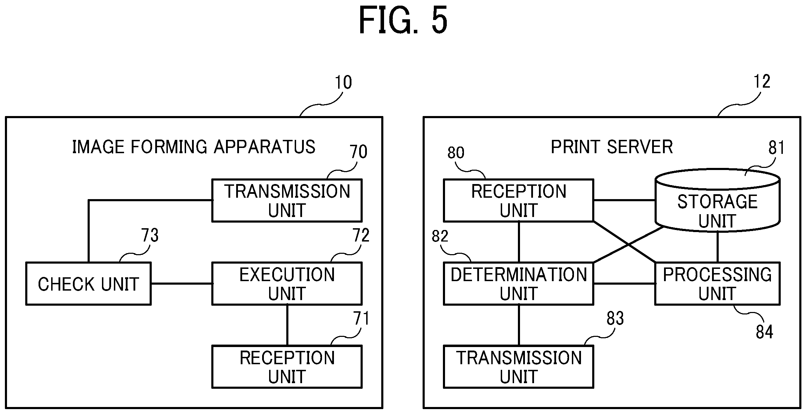

FIG. 5 is a block diagram illustrating an example of a functional configuration of the print server 12 according to the present embodiment of the disclosure. Each function of the print server 12 is implementable by one or more processing circuits or circuitry such as the CPU 50. The "processing circuit or circuitry" includes a programmed processor to execute each function by software, such as a processor implemented by an electronic circuit, and devices, such as an Application Specific Integrated Circuit (ASIC), a Digital Signal Processors (DSP), a Field Programmable Gate Array (FPGA), and conventional circuit components arranged to perform the recited functions. In FIG. 5, a functional configuration of the image forming apparatus 10 is illustrated in addition to the functional configuration of the print server 12.

The image forming apparatus 10 includes a transmission unit 70 for transmitting a print data acquisition request, a reception unit 71 for receiving the print data, an execution unit 72 for executing (processing) printing, and a check unit 73 for checking an execution status (processing status). The transmitting unit 70 transmits the acquisition request including the location information of the image forming apparatus 10 and notifies the print server 12 of an execution result of the execution unit 72. The execution result (printing result) indicates "print completion" or "print error". The print completion means the printing is successfully completed. The print error includes information indicating a type of error, for example.

The print server 12 includes a reception unit 80 for receiving the print data from the host system 13 and the acquisition request from the image forming apparatus 10, a storage unit 81 for storing the received print data, a determination unit 82 for determining whether the print data to be processed by the image forming apparatus 10 is stored in the storage unit 81 based on the location information included in the acquisition request, and a transmission unit 83 for transmitting the print data to be processed to the image forming apparatus 10 to instruct the processing of the print job when the print data is stored. The reception unit 80 further receives the printing result from the image forming apparatus 10.

The print server 12 includes a processing unit 84 for locking the print data. When the determination unit 82 determines that the print data to be processed is stored, the processing unit 84 locks the determined print data so that another image forming apparatus 10 installed in the same location does not acquire the print data. The processing unit 84 deletes the locked print data from the print server 12 in response to the printing result that indicates the print completion and is received by the reception unit 80. In addition, in response to the printing result that indicates the print error and is received by the reception unit 80, the processing unit 84 unlock the print data so that another image forming apparatus installed in the same location is to acquire the print data.

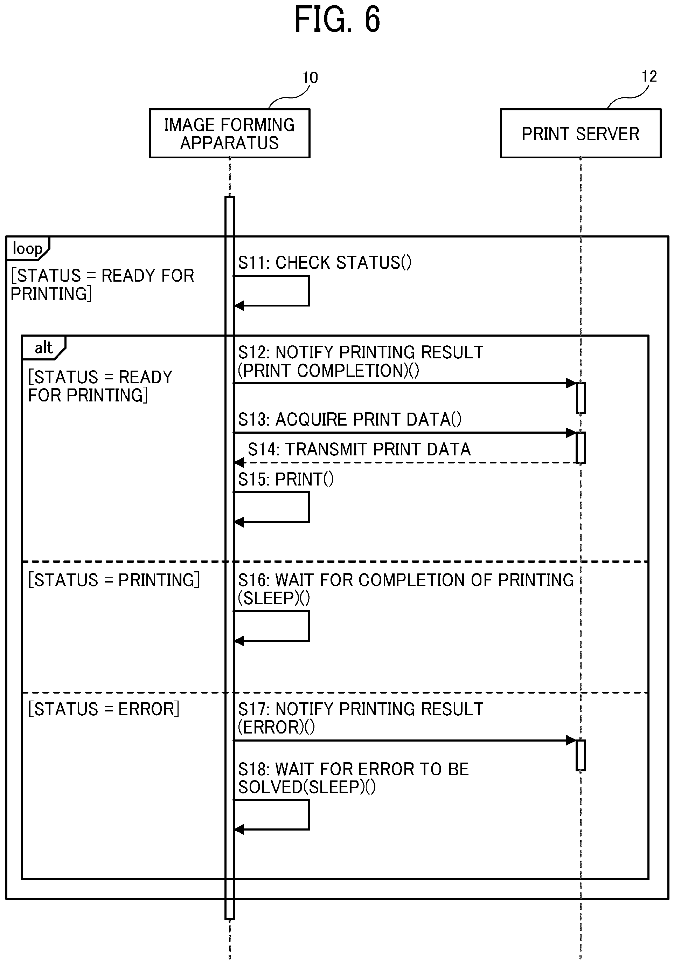

FIG. 6 is a sequence diagram illustrating a processing flow executed by the image forming apparatus 10 according to the present embodiment. The image forming apparatus 10 checks an operating status of the own device (S11). The operating status includes a status of "printing" and a status of "not printing". The status of "not printing" includes a status in which printing is completed successfully and another status in which printing is failed.

When the printing is completed successfully, the image forming apparatus 10 enters a status of being ready for printing and transmits the printing result (print completion) to the print server 12 (S12). After that, the image forming apparatus 10 transmits a print data acquisition request to the print server 12 (S13). In response to the print data acquisition request from the image forming apparatus 10, the print server 12 transmits to the image forming apparatus 10, if there is any stored print data to be processed by the image forming apparatus 10, the print data to instruct the processing of a print job corresponding to the print data (S14). The image forming apparatus 10 performs the processing of the print job in response to receiving the print data from the print server 12 (S15). That is, the image forming apparatus 10 executes printing of the print data. When the printing is completed successfully, the processing is repeated from S12 again.

When the status indicates "printing", printing of the print data is being executed, and the image forming apparatus 10 waits for completion of execution of the printing (S16). After completion of the execution, whether the processing proceeds to S12 or S17 is determined based on an execution result, which is "print completion" or "print error".

When a print error occurs, the image forming apparatus 10 transmits a printing result (error) to the print server 12 (S17). Examples of the error include out of ink and paper jam. After that, the image forming apparatus 10 waits for the error to be solved (S18). When an error occurs, the print data is not deleted. Accordingly, the processing proceeds to S13 after the error is solved.

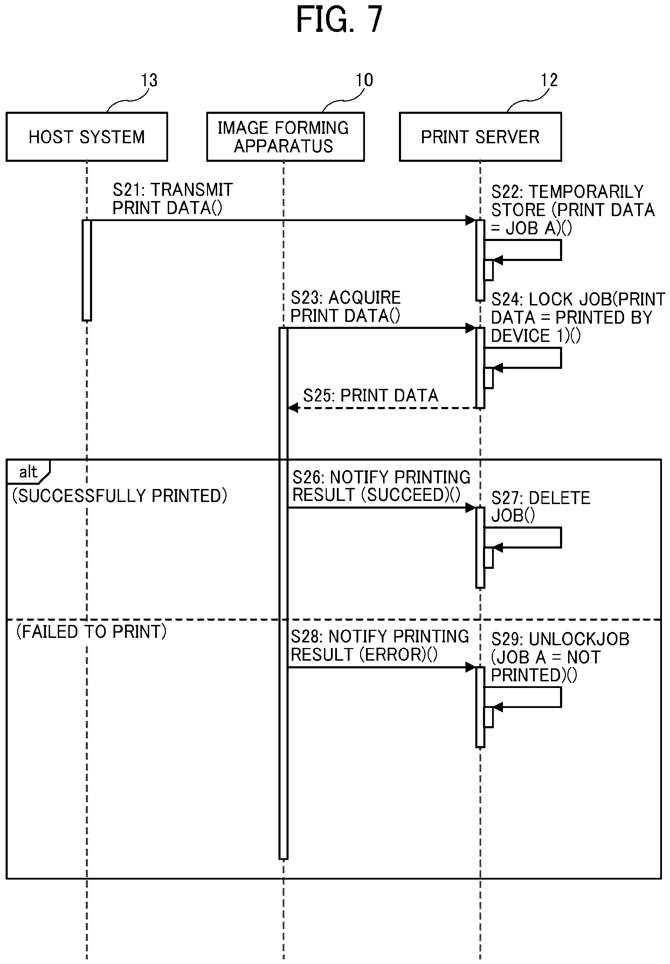

FIG. 7 is a sequence diagram illustrating a processing flow executed by the print server 12 according to the present embodiment. In response to a print job processing request received from the client PC 11, the host system 13 generates print data including location information based on the processing request and transmits the print data to the print server 12 (S21). The location information is information indicating where the image forming apparatus 10 and the client PC 11 are, or are installed, such as information indicating Building B 6th Floor, for example. The host system 13 converts user information such as a user name included in the processing request into corresponding location information and generates the print data including the location information.

Upon receiving the print data from the host system 13, the print server 12 temporarily stores the print data (S22). In the example of FIG. 7, the print data is referred to as Job A. The print data may be stored in the HD 53 provided in the print server 12, but the present disclosure is not limited thereto, and may be stored in a database connected to the print server 12 or accessible by the print server 12.

After the image forming apparatus 10 checks the status of the own device and transmits the printing result (print completion) or after the image forming apparatus 10 checks the status of the own device and confirms that an error is solved, the image forming apparatus 10 transmits a print data acquisition request to the print server 12 (S23). The print server 12 receives a print data acquisition request from the image forming apparatus 10, determines whether print data that includes location information same as the location information included in the acquisition request and of which printing is not being processed is stored, sets the print data, which includes the same location information and of which the printing is not being processed, if there is such the print data stored, as acquisition target print data (Job A), changes a status of Job A to "being printed (being processed)", and executes locking of the print data (S24). While Job A is locked, Job A is not acquired and executed by another image forming apparatus 10 installed in the same location.

When no print data, which includes the same location information and is not being printed, is stored, the print server 12 waits for newly receiving and registering print data.

The print server 12 transmits the locked print data to the image forming apparatus 10 (S25). Upon receiving the print data, the image forming apparatus 10 executes printing of the print data. When execution of the printing is successfully completed, the image forming apparatus 10 transmits a print completion notification to the print server 12 (S26). The print server 12 receives the print completion notification and deletes Job A, which is locked (S27). After transmitting the print completion notification, the image forming apparatus 10 transmits an acquisition request to the print server 12 again.

When a printing error occurs, the image forming apparatus 10 transmits a print error notification to the print server 12 (S28). In response to the print error notification, the print server 12 changes the status of Job A to "not yet printed (not yet processed)" (S29). This allows the print server 12 to receive a print data acquisition request from another image forming apparatus.

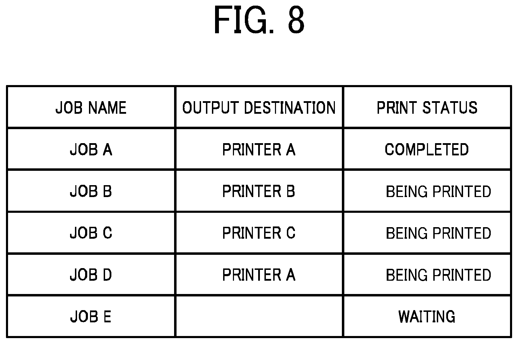

The print server 12 holds, or stores, management information indicating a job executing (processing) statuses in the image forming apparatus 10, as illustrated in FIG. 8. For each job corresponding to the print data, a print status (processing status) and an output destination are associated with each other. Information on the print status and the output destination is updated each time when a print request or a printing result notification is received from the image forming apparatus 10. The management information may be updated by the processing unit 84. The management information may be updated by an update unit or the like provided separately from the processing unit 84.

By using the management information, the print server 12 is able to transmit the print data corresponding to a plurality of print jobs to a plurality of image forming apparatuses 10, in a manner that the plurality of print jobs is distributed without any duplication. Further, the management information allows a user to obtain the information on an output destination and a printing status of each job. When a printing result indicates the print completion (printing is successfully completed), information on the corresponding job is deleted from the management information along with the print data.

Although the one of the embodiments of the present disclosure have been described above, the above-described embodiment is illustrative and does not limit the present invention. The above-described embodiment of the present disclosure may be modified within a range that can be conceived by those skilled in the art. The modification includes additions of other embodiments, modifications, and deletions. The modifications are included in the scope of the present disclosure as long as the actions and effects of the present disclosure are provided.

Any one of the above-described operations may be performed in various other ways, for example, in an order different from the one described above.

The present disclosure may be implemented in any convenient form, for example using dedicated hardware, or a mixture of dedicated hardware and software. The present disclosure may be implemented as computer software implemented by one or more networked processing apparatuses. The processing apparatuses can comprise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Although the embodiments of the disclosure have been described and illustrated above, such description is not intended to limit the disclosure to the illustrated embodiments. Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

## Claims

1. An information processing device (12), comprising:
a reception means (50, 57, 80) configured to receive an acquisition request for a job to be processed, the acquisition request including identification information identifying an apparatus (10) and location information indicating a location of the apparatus (10);
a determination means (50, 82) configured to determine whether the job to be processed is stored, based on the location information included in the acquisition request; and
a transmission means (50, 57, 83) configured to transmit, in response to a determination result indicating that the job to be processed is stored, the job to the apparatus (10) identified by the identification information included in the acquisition request.

2. The information processing device (12) of claim 1, further comprising:
a processing means (50, 84) configured to update management information based on a processing result of the job received by the reception means (50, 57, 80), the management information including a transmission destination of the job transmitted by the transmission means (50, 57, 83) and a processing status of the job.

3. The information processing device (12) of claim 2,
wherein the determination means (50, 82) determines whether there is the job having the same location information as one included in the acquisition request and that is not being processed, based on the management information.

4. The information processing device (12) of claim 2 or claim 3,
wherein the processing means (50, 84) updates the management information to prevent the job from being transmitted to another apparatus in response to another acquisition request from the another apparatus, updating the management information being changing the processing status of the job to indicate that the job is being processed.

5. The information processing device (12) of claim 2 or claim 3,
wherein, in response to a job completion notification related to the job transmitted by the transmission means (50, 57, 83), the processing means (50, 84) deletes the job and the management information corresponding to the job, the job completion notification indicating the job is successfully processed.

6. The information processing device (12) of claim 4,
wherein, in response to a job error notification related to the job transmitted by the transmission means (50, 57, 83), the processing means (50, 84) further updates the management information corresponding to the job, updating the management information being changing the processing status of the job to indicate that the job is not processed yet.

7. An information processing system, comprising:
an information processing device (12); and
one or more apparatuses (10),
the information processing device (12) including
a reception means (50, 57, 80) configured to receive an acquisition request for a job to be processed, the acquisition request including identification information identifying one of the one or more apparatuses (10) and location information indicating a location of the one of the one or more apparatuses (10),
a determination means (50, 82) configured to determine whether the job to be processed is stored, based on the location information included in the acquisition request, and
a transmission means (50, 57, 83) configured to transmit, in response to a determination result indicating that the job to be processed is stored, the job to the one of the one or more apparatuses (10) identified by the identification information included in the acquisition request
each of the one or more apparatuses (10) being configured to
transmit the acquisition request for the job,
receive an instruction for processing the job from the information processing device (12), and
process the job in response to the instruction.

8. The information processing system of claim 7,
wherein each of the one or more apparatuses (10) includes a transmission means, the transmission means (30, 24, 70) being configured to
transmit the acquisition request for the job to the information processing device (12), and
transmit, to the information processing device (12), a processing result of the job.

9. The information processing system of claim 7 or 8, further comprising:
a job generation system (13) configured to
receive a job processing request including user information,
generate the job having the location information corresponding to the user information, and
store the job.

10. A carrier means carrying a computer readable code for controlling a computer
system to carry out a method, the method comprising:
receiving (SI, S13, S23) an acquisition request for a job to be processed, the acquisition request including identification information identifying an apparatus (10) and location information indicating a location of the apparatus (10);
determining (S24) whether the job to be processed is stored, based on the location information included in the acquisition request; and
transmitting (S4, S14, S25), in response to a determination result indicating that the job to be processed is stored, the job to the apparatus (10) identified by the identification information included in the acquisition request.
